# EUROPÄISCHE PATENTSCHRIFT

(11) **EP 1 246 680 B1**
(45) Veröffentlichungstag und Bekanntmachung des Hinweises auf die Patenterteilung: **01.10.2003**
(21) Anmeldenummer: 01901143.6
(22) Anmeldetag: 03.01.2001
(51) Int. Cl.: B01D 29/15, B01D 29/54, B01D 35/157

(54) **FILTERVORRICHTUNG**
FILTER DEVICE
DISPOSITIF FILTRANT

(30) Priorität: 14.01.2000 DE 10001259
(43) Veröffentlichungstag der Anmeldung: 09.10.2002
(73) Patentinhaber: HYDAC FILTERTECHNIK GMBH, D-66280 Sulzbach (DE)
(72) Erfinder: SANN, Norbert, 66292 Riegelsberg (DE); REIK, Martin, 66125 SAARBRÜCKEN (DE); HENNES, Stefan, 66540 Neunkirchen (DE); LEICHNER, Karl-Heinz, 66299 Friedrichsthal (DE)
(74) Vertreter: Bartels, Martin Erich Arthur
(86) Internationale Anmeldenummer: EP0100011
(87) Internationale Veröffentlichungsnummer: WO01051167

(56) Entgegenhaltungen:
- DE-A- 1 951 668
- DE-A- 4 221 897
- GB-A- 860 871
- GB-A- 965 328
- US-A- 3 344 923
- US-A- 4 655 914

## Beschreibung

Die Erfindung betrifft eine Filtervorrichtung mit den Merkmalen des Oberbegriffes des Patentanspruches 1.

Die US-A-3 344 923 beschreibt eine Filtereinheit mit zwei Filterelementen von hohlzylindrischer Bauform und mit gleicher Filterfeinheit, die in einem gemeinsamen Gehäuse so angeordnet sind, daß ihre Längsachsen miteinander fluchten. Durch eine quer zu dieser Längsachse verlaufende Trennvorrichtung sind die zwei Filterelemente voneinander getrennt und es wird gleichzeitig der in Fluidströmungsrichtung des abzureinigenden Fluids vor den Filtermaterialien liegende Filterraum (Unfiltratraum) in zwei Teilräume unterteilt, zwischen denen jedoch eine fluidführende Verbindung hergestellt werden kann durch ein in der Trenneinrichtung untergebrachtes Ventil. Dieses ist in der Art eines Bypaßventils ausgebildet und zunächst geschlossen, wobei die Öffnung erst ab einem gewissen Differenzdruck zwischen den zwei Teilräumen infolge zunehmender Verschmutzung und damit abnehmender Permeabilität dessen in Fluidströmungsrichtung gesehen ersten Filterelementes stattfindet. Das zweite, als Reserveeinheit dienende Filterelement kann dann sukzessive die Funktion des ersten Filterelementes übernehmen und auf diese Weise einen permanenten, störungsfreien Filterbetrieb gewährleisten. Ein permanenter Filtrationsbetrieb mit einem Hauptund einem Nebenstromfilter mit unterschiedlichen Filterfeinheiten ist nicht vorgesehen.

Die GB 860 871 A zeigt eine gattungsgemäße Filtervorrichtung, bei der eine Beeinflussung des Fluidstromes und damit der Druckverhältnisse zwischen den beiden Teilräumen, die dem ersten bzw. zweiten Filterelement zuzuordnen sind, nicht nur im Unfiltratraum erfolgt, sondern auch auf der Seite des Filtratraumes. Dort werden die zwei von den beiden Filterelementen ausgehenden Filtratteilströme zunächst getrennt geführt mit Hilfe einer kegelstumpfförmigen Spiralfeder, deren schmäleres Ende fest verbunden ist mit der Austrittsöffnung für den Filtratteilstrom, der aus dem feineren und damit weniger permeablen Filterelement austritt. Das breitere freie Ende der Spiralfeder steht in offener Verbindung mit dem sie umgebenden Raum, in den der Filtratteilstrom des gröberen und damit höher permeablen Filterelementes abgegeben wird. Dieser erzeugt an besagtem, offenen Ende der Spiralfeder Strömungswirbel, die eine Sogwirkung ausüben auf den Innenraum der Spiralfeder. Dadurch wird das Einströmen des Filtratteilstromes von dem feineren Filterelement in den Filtratteilstrom des gröberen Filterelementes unterstützt. Die mit zunehmendem Fluiddurchsatz ansteigende Sogwirkung am freien Ende der Spiralfeder führt schließlich dazu, daß die bis dahin formschlüssig aneinanderliegenden Windungen der Spiralfeder in Richtung der Längsachse dieser Feder voneinander abgehoben werden; wodurch die Trennung der beiden Filtratteilströme entlang der Spiralfeder aufgehoben und der mit der Wirbelbildung einhergehende Druckabfall im System begrenzt wird. Mit dieser bekannten Lösung ist bei sehr niederen und sehr hohen Fluiddurchsatzmengen nur der Hauptstromfilter im Einsatz und nur in den dazwischenliegenden mittleren Bereichen an Durchsatzmengen setzt die Filtration über den parallel zum Hauptfilter angeordneten Nebenfilter ein, was sich nachteilig auf die Reinheit des Fiftrats während des gesamten Filtrationsbetriebes auswirkt. Ein Einsatz des Nebenfilters während des genannten Filtrationsbetriebes ist nicht vorgesehen.

Ausgehend von diesem Stand der Technik stellt sich die Erfindung die Aufgabe, die gattungsgemäße Filtervorrichtung dahingehend weiter zu verbessem, daß bei jeweils gegebener unterschiedlicher Filterfeinheit der Filterelemente eine erhöhte Reinheit des Filtrats erzielt wird, und zwar während des gesamten Filtrationsbetriebes.

Diese Aufgabe ist erfindungsgemäß dadurch gelöst, daß gemäß dem kennzeichnenden Teil des Patentanspruches 1 die Drosselstelle der weiteren Durchlaßstelle aus einem Fluidventil gebildet ist, das mit einem vorgebbaren Schließdruck versehen ist, der zu einer Erhöhung des Vorspanndruckes im Innenraum des Filterelementes mit der gröberen Filterfeinheit führt. Auf diese Art und Weise ist erreicht, daß in allen Betriebszuständen der Filtervorrichtung, also unabhängig von dem jeweiligen Fluiddurchsatz, ein relativ hoher Anteil des zu filtrierenden Fluids durch das Filterelement mit der feineren Filtereinheit geführt wird, wodurch die Reinheit des abströmenden Filtratstromes insgesamt erhöht ist.

Mit den genannten Merkmalen ist eine Kombination eines sog. Haupt- und eines sog. Nebenstromfilters in einem Filtergehäuse erreicht, wobei im Hinblick auf die unterschiedlichen Filterfeinheiten der eingesetzten Filtermaterialien das Filterelement mit der gröberen Filterfeinheit als Hauptstromfilter dient und derart den größten Teil des abzureinigenden Volumenstromes übernimmt, wohingegen das Filterelement mit der feineren Filterfeinheit einen demgegenüber kleineren Volumenstrom abreinigt. Eine dahingehende Reinigung mittels Haupt- und Nebenstromfilter erzeugt, obwohl der größere Volumenanteil des abzureinigenden Fluids der Grobfiltration unterzogen wird, dennoch sehr gute Reinheitsqualitäten, wobei die beanspruchte Filtervorrichtung konstruktiv sehr klein aufbaut und überhaupt mit wenig Baukomponenten auskommt, was die Funktionssicherheit erhöht sowie die Herstell-, Installations- und Wartungskosten niedrig hält. Über die angesprochene Durchlaßstelle mit vorgebbarem Querschnitt innerhalb der Trennvorrichtung läßt sich sehr exakt eine Volumenstromaufteilung für die Haupt- und Nebenstromfiltration erreichen, was die Qualität der Filtration für das abzureinigende Fluid erhöht.

Bei einer bevorzugten Ausführungsform der erfindungsgemäßen Filtervorrichtung weist das Filtergehäuse eine Einlaßstelle für das abzureinigende Fluid und eine Auslaßstelle für das abgereinigte Fluid auf, wobei das Filterelement mit der gröberen Filterfeinheit zu der Einlaßstelle und das Filterelement mit der feineren Filterfeinheit zu der Auslaßstelle benachbart gegenüberliegend angeordnet ist. Hierdurch ergibt sich eine besonders günstige Fluiddurchströmung von der Einlaßstelle zur Auslaßstelle hin.

Bei einer weiteren bevorzugten Ausführungsform der erfindungsgemäßen Filtervorrichtung weist die Trennvorrichtung eine Trennplatte auf, die mit dem Filtergehäuse dichtend verbunden ist und dieses in zwei benachbarte Gehäuseteilräume unterteilt, wobei die jeweils benachbarten Filterelemente mit ihren einander zugewandten Enden in Anlage mit der Trennplatte sind, die für eine Verbindung der Innenräume dieser Filterelemente mit einer weiteren Durchlaßstelle versehen ist. Vorzugsweise weist dabei der eine Gehäuseteilraum mit dem Filterelement mit der gröberen Filterfeinheit den Filterraum auf, der mit der Einlaßstelle fluidführend verbunden ist, und der andere Gehäuseteilraum mit dem Filterelement mit der feineren Filterfeinheit weist den anderen Filterraum auf, der über dieses Filterelement fluidführend mit der Auslaßstelle verbunden ist. Des weiteren ist über die Durchlaßstelie der eine Filterraum mit dem anderen Filterraum fluidführend in Verbindung mit der Auslaßstelle. Hierdurch ist ein besonders kompakter Aufbau der gesamten Filtervorrichtung erreicht, wobei diese kein vollständig eigenes Filtergehäuse benötigt, sondern beispielsweise auch für einen tankseitigen Einbau mit integriertem Filtertopf geeignet ist.

Bei einer weiteren besonders bevorzugte Ausführungsform der erfindungsgemäßen Filtervorrichtung sind die Filterelemente koaxial zueinander innerhalb des Filtergehäuses angeordnet und mit ihren freien einander abgewandten Enden in Elementaufnahmen geführt. Vorzugsweise sind dabei ferner die Filtermaterialien der Filterelemente durch Stützkörper abgestützt, die modular aufgebaut an verschiedene Längenabmessungen der Filterelemente anpaßbar sind. Auf diese Art und Weise läßt sich insgesamt für die erfindungsgemäße Filtervorrichtung ein modularer Aufbau erreichen, der kostengünstig an verschiedenste Einsatzfälle anpaßbar ist.

Bei einer weiteren besonders bevorzugten Ausführungsform der erfindungsgemäßen Filtervorrichtung besteht die eine Durchlaßstelle aus einem bogenförmigen Durchlaßsegment und die weitere Durchlaßstelle weist derart eine Drosselstelle auf, daß der Durchflußwiderstand für das Filterelement mit der gröberen Filterfeinheit erhöht ist. Dabei kommt auch der ersten Durchlaßstelle eine entsprechende Drosselfunktion zu, um derart die Wirksamkeit des Nebenstromfilters zu gewährleisten, unabhängig von der tatsächlichen Verschmutzungssituation des Hauptstromfilters. Insbesondere lassen sich über die angesprochenen Drosselstellen die Volumenströme innerhalb der Filtervorrichtung derart abstimmen, daß eine sinnvolle Aufteilung in Hauptstrom- und Nebenstromfiltration erreicht ist. Vorzugsweise ist dabei die Drosselstelle betreffend die weitere Durchlaßstelle aus einem Fluidventil gebildet, das mit einem vorgebbaren Federschließdruck das Schließteil des Fluidventils in Richtung der weiteren Durchlaßstelle drückt. Hierdurch ergibt sich für den Gehäuseteilraum mit dem Filterelement gröberer Filterfeinheit eine Art Vorspannsituation und das zu filtrierende Fluid ist im Hinblick auf die gewählte Vorspannung gezwungen, die als Drosselstelle fungierende erste Durchlaßstelle in der Trennwand zwischen den Gehäuseteilräumen für eine Nebenstromfiltration entsprechend zu passieren.

Bei einer weiteren bevorzugten Ausführungsform der erfindungsgemäßen Filtervorrichtung ist zumindest das Filterelement mit der gröberen Filterfeinheit mit einem Bypaßventil versehen. Kommt es hier zu einer vollständigen Zusetzung des Hauptstromfilters, öffnet das Bypaßventil und die Hydraulikversorgung bleibt weiterhin sichergestellt, was eine Rolle spielt, sofern die Vorrichtung entsprechend hydraulischen Arbeitsmaschinen oder Vorrichtungen vorgeschaltet ist. Unabhängig von der Bypaßsituation bleibt aber die Nebenstromfiltration gegebenenfalls nur eingeschränkt weiter erhalten. Vorzugsweise ist des weiteren vorgesehen, daß mindestens eines der Filtermaterialien, vorzugsweise das Filtermaterial mit der feineren Filterfeinheit, wasserabsorbierende Eigenschaften aufweist. Hierdurch läßt sich schädliches Wasser aus dem Fluidkreislauf über die Filtervorrichtung bei der Haupt- und Nebenstromfiltration entfernen.

Als besonders vorteilhaft hat es sich erwiesen, die angesprochenen Durchlaßstellen derart auszulegen, daß auf ein Volumenanteil, das im Nebenstrom über das Filterelement mit der feineren Filterfeinheit strömt, acht bis zehn Volumenanteile im Hauptstrom über das Filterelement mit der gröberen Filterfeinheit kommen.

Im folgenden wird die erfindungsgemäße Filtervorrichtung anhand der Zeichnung näher erläutert.

Es zeigen in prinzipieller und nicht maßstäblicher Darstellung die
- Fig.1: einen Längsschnitt durch die gesamte Filtervorrichtung im Einbauzustand;
- Fig.2: einen Längsschnitt durch die eigentlichen Haupt- und Nebenstromfiltereinheiten nach der Fig.1;
- Fig.3: in vergrößerter Darstellung eine Draufsicht auf die Trennvorrichtung nach den Fig.1 und 2.

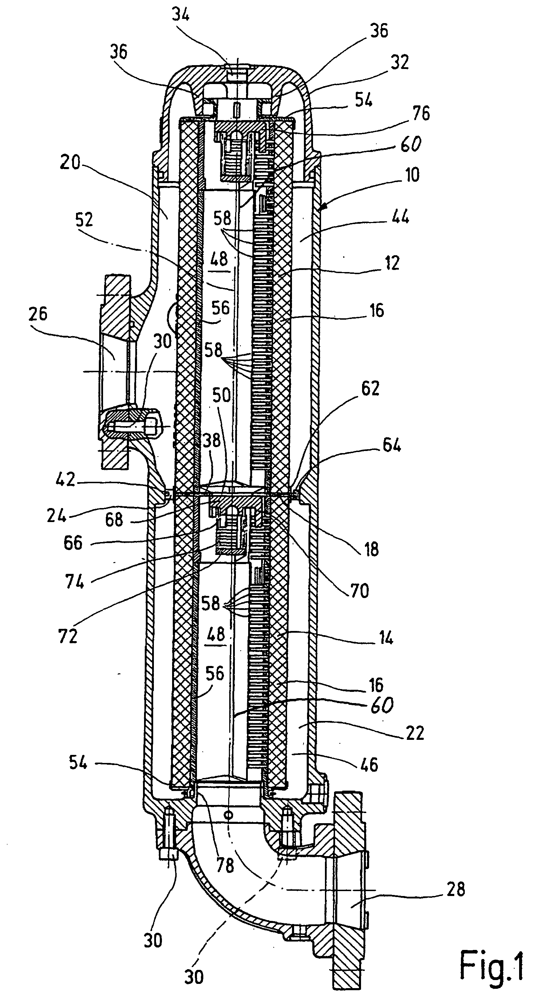

Die Filtervorrichtung nach der Fig.1 weist ein als Ganzes mit 10 bezeichnetes Filtergehäuse auf. In dem Filtergehäuse sind in Übereinanderanordnung zwei Filterelemente 12,14 angeordnet. Die dahingehenden Filterelemente 12,14 weisen voneinander verschiedene Filterfeinheiten auf. Diese können bedingt sein durch den unterschiedlichen Einsatz von verschiedenen Filtermaterialien 16 oder es werden dieselben Filtermaterialien 16 eingesetzt mit jedoch voneinander verschiedenen Durchlässigkeitswerten. Die Filtermaterialien 16 können aus Hohlzylindern gebildet sein, vorzugsweise jedoch aus sog. plissierten, also zick-zack-förmig aufgefalteten Filtermatten. Insbesondere können hier Filtermaterialien 16 aus Kunststoffmaterial eingesetzt werden.

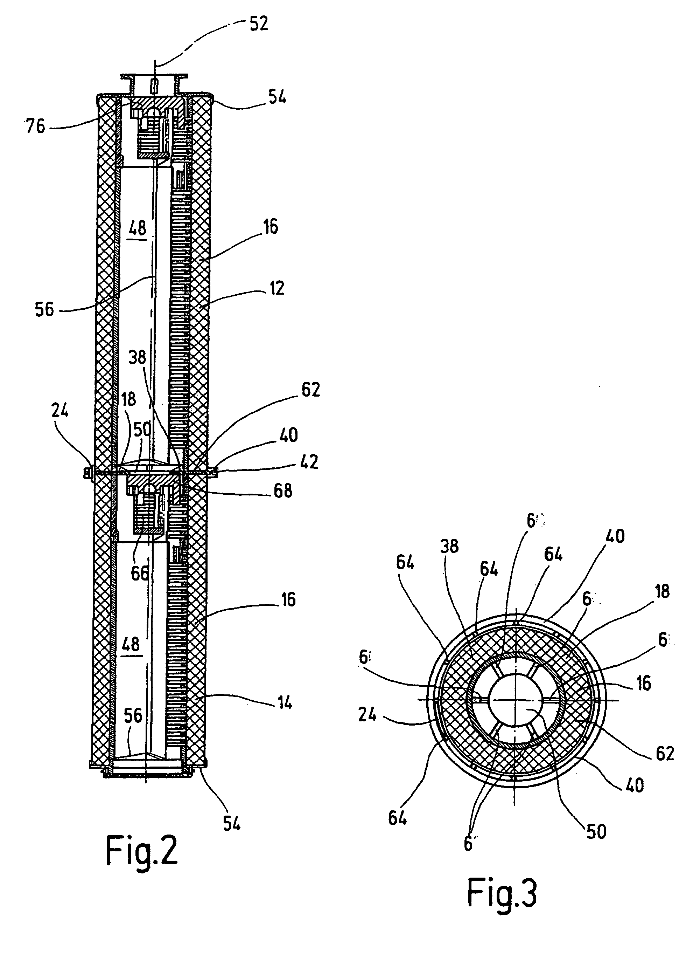

Die beiden Filterelemente 12,14 sind über eine Trennvorrichtung 18 teilweise voneinander räumlich und im Hinblick auf die äußere Fluidführung voneinander getrennt. Die dahingehende Trennvorrichtung 18 ist in Draufsicht in vergrößerter Darstellung in der Fig.3 wiedergegeben. Für eine fluidführende Verbindung zwischen den beiden benachbarten Filterräumen 20,22 weist jedoch die angesprochene Trennvorrichtung eine Durchlaßstelle 24 auf, die in der eigentlichen Fluidströmungsrichtung innerhalb der Filtervorrichtung des abzureinigenden Fluids vor den Filtermaterialien 16 angeordnet ist. Das Filtergehäuse 10 weist eine Einlaßstelle 26 für das abzureinigende bzw. zu filtrierende Fluid auf sowie eine Auslaßstelle 28 für das abgereinigte Fluid. Ferner ist vorgesehen, daß das Filterelement 12 mit der gröberen Filterfeinheit zu der angesprochenen Einlaßstelle 26 benachbart gegenüberliegend angeordnet ist, wohingegen das Filterelement 14 mit der feineren Filterfeinheit zu der Auslaßstelle 28 benachbart gegenüberliegend angeordnet ist. Sowohl die Einlaßstelle 26 als auch die Auslaßstelle 28 sind in der Art eines Einlaß- bzw. Auslaßflansches ausgebildet, wobei die dahingehenden Flansche mit dem eigentlichen Gehäuse 10 über entsprechende Schraubverbindungen 30 verbunden sind. Die flanschartige Einlaßstelle 26 ist an eine Fluidzufuhr mit verunreinigtem Fluid innerhalb eines Hydraulikkreislaufs an diesen anschließbar und erweitert sich für einen strömungsgünstigen Fluideinlaß konisch in Richtung des Filterraumes 20.

Ferner ist die Eintaßstelle 26 dichter benachbart zu der Trennvorrichtung 18 im Filtergehäuse 10 angeordnet als gegenüber dem oberen Abschlußdeckel 32 des dahingehenden Filtergehäuses 10. Der Abschlußdeckel 32 ist wiederum über eine nicht näher dargestellte Schraubverbindung mit dem sonstigen hohlzylindrischen Filtergehäuse 10 verbunden und gegenüber dieser Hohlzylinderwandung über eine übliche O-Ring-Dichtung abgedichtet. Über einen Abschlußstutzen 34 am oberen Ende des Abschlußdeckels 32 läßt sich die Filtervorrichtung entlüften oder beispielsweise an eine nicht näher dargestellte Fluidverschmutzungsanzeige anschließen. Nach Entfernen des Abschlußdeckels 32 ist es jedenfalls möglich, die eigentliche Filtereinheit mit den Filterelementen 12 und 14 bei entsprechender Verschmutzung gegen eine neue Einheit auszutauschen. Des weiteren weist der Abschlußdeckel 32 auf seiner Innenseite nach innen gerichtete Anlagestege 36 auf, die einstückig miteinander verbunden in der Art eines Anlagestegringes ausgebildet sein können.

Die Trennvorrichtung 18 besteht im wesentlichen aus einer Trennplatte 38, die mit dem Filtergehäuse 10 auf seiner Innenseite dichtend verbunden ist. Hierfür weist die Trennplatte 38 einen außenumfangsseitig verlaufenden nutartigen Ringkanal 40 auf, in den ein üblicher O-Dichtring 42 eingelegt die Abdichtung übernimmt. Vorzugsweise ist die Trennplatte 38 als Kunststoff-Spritzteil ausgebildet und läßt sich derart kostengünstig herstellen. Aufgrund der angesprochenen Trennplatte 38 ist das Filtergehäuse 10 in zwei benachbarte Gehäuseteilräume 44,46 unterteilt, wobei die jeweils benachbarten Filterelemente 14,16 gemäß der Darstellung nach der Fig.1 mit ihren einander zugewandten Enden in stirnseitiger Anlage mit der Trennplatte 38 sind, die für eine Verbindung der Innenräume 48 dieser Filterelemente 12,14 mit einer weiteren Durchlaßstelle 50 versehen ist. Der eine Gehäuseteilraum 44 mit dem Filterelement 12 mit der gröberen Filterfeinheit weist denjenigen Filterraum 20 auf, der mit der Einlaßstelle 26 unmittelbar fluidführend verbunden ist. Der andere Gehäuseteilraum 46 mit dem Filterelement 14 mit der feineren Filterfeinheit hingegen weist den anderen Filterraum 22 auf, der wiederum nunmehr über dieses Filterelement 14 fluidführend mit der Auslaßstelle 28 fluidführend in Verbindung steht. Die Filterelemente 12,14 sind koaxial zueinander innerhalb des Filtergehäuses 10 angeordnet, also entlang der gemeinsamen Längsachse 52.

Das in Blickrichtung auf die Fig.1 und 2 gesehen obere Filterelement 12 ist von seiner Längenabmessung her etwas größer gewählt als das darunterliegende weitere Filterelement 14. Ferner sind die Filterelemente 12,14 mit ihren freien voneinander abgewandten Enden in Elementaufnahmen 54 geführt, die wiederum mit Stützrohren 56 auf der Innenseite des jeweiligen Filterelementes 12,14 in Verbindung stehen. Die dahingehenden Stützrohre 56 weisen zur Bildung von Stützkörpern einzelne Stützlamellen 58 auf, die wiederum zwischen sich freie Fluiddurchtrittsstellen begrenzen. Die Stützrohre 56 sind modular aufbaubar, d.h. sie können aus einzelnen miteinander verbindbaren Segmentteilen bestehen, die in Abhängigkeit der benötigten Längenmaße hintereinander anordenbar sind. Die Stützrohre 56 sind ferner aus Kunststoffmaterialien gebildet und weisen innenumfangsseitig diametral zueinander verlaufende Stützstege 60 auf. Der dahingehende Aufbau von Stützrohren 56 ist im Stand der Technik bekannt, so daß an dieser Stelle hierauf nicht näher eingegangen wird. Die Stützstege 60 können jedenfalls der Fluidströmung innerhalb des jeweiligen Filterelementes 12,14 eine definierte Richtung geben, was im Filtrationsbetrieb energetisch günstig ist. Die Stützstege 60 behindern jedenfalls nicht den Fluiddurchtritt aus dem Filterelement 12 in die weitere Durchlaßstelle 50 bzw. den Übergang des Innenraumes 48 des Filterelementes 14 in Richtung der gekrümmt verlaufenden flanschartigen Auslaßstelle 28. Die Filterelemente 12,14 sind zylindrisch ausgebildet und weisen hohlzylindrische Innenräume für die Fluidführung auf.

An ihren einander benachbarten Enden sind die Filterelemente 12,14 korrespondierend in eine Ringausnehmung 62 der Trennplatte 38 aufgenommen, die hierfür außenumfangsseitig zu beiden Seiten hin, also nach oben und unten, eine entsprechende Aufnahmeverlängerung aufweist. Nach innen hin sind die Filterelemente 12,14 wiederum über die endseitigen Bereiche der Stützrohre 56 abgestützt, die in diesem Bereich in Anlage mit der Trennplatte 38 sind. Der Ringkanal 40 ist wiederum an die Ringausnehmung 62 festgelegt und über diametral einander gegenüberliegende Stege 6 und 64 versteift. Die erste Durchlaßstelle 24 ist, wie dies insbesondere die Fig.3 zeigt, aus einem bogenförmigen Durchlaßsegment gebildet, das sich zwischen zwei einander benachbart gegenüberliegenden Verbindungsstegen 64 erstreckt. Die weitere Durchlaßstelle 50 bildet jedenfalls derart eine Drosselstelle aus, daß der Durchflußwiderstand für das Filterelement 12 mit der gröberen Filterfeinheit erhöht ist. Insbesondere ist diese Drosselstelle aus einem Fluidventil 66 gebildet, das mit einem vorgebbaren Federschließdruck das Schließteil 68 in Richtung der weiteren Durchlaßstelle 50 drückt. Das Schließteil 68 weist umfangsseitig verteilt Führungsstege 70 auf, die eine genaue Führung des Schließteils 68 innerhalb des unteren Stützrohres 56 erlauben. Des weiteren ist eine Abstützplatte 72 des Fluidventils 66 fest mit dem unteren Stützrohr 56 verbunden und eine Schließfeder 74 in Form einer Druckfeder stützt sich mit ihrem einen freien Ende an dieser Abstützplatte 72 ab und mit ihrem anderen freien Ende an einer Radialausnehmung des Schließteils 68 des Fluidventils 66.

In den Fig.1 und 2 ist das Fluidventil 66 in seiner geschlossenen Stellung dargestellt. Das darüberliegende untere Ende der oberen Stützrohrkonstruktion 56 ist schematisch wiedergegeben, wobei jedenfalls die Stützstege 60 des oberen Stützrohres 56 in diesem Bereich die Funktion des Fluidventils 66 nicht stören. Das Fluidventil 66 wird mit einem vorgebbaren Schließdruck versehen, der zu einer Erhöhung des Vorspanndruckes im Innenraum 48 des oberen Filterelementes 12 führt mit der Folge, daß das verschmutzte Fluid durch den erhöhten Vorspanndruck verlangsamt das entsprechende Filtermaterial 16 passiert und die Neigung für das verschmutzte Fluid größer wird, durch die erste Durchlaßstelle 24 in der Trennplatte 38 zum weiteren Filterelement 14 mit feinerer Filterfeinheit zu strömen. Demgemäß wird verhindert, daß eine Filtrierung nur im Hauptstrom über das obere Filterelement 12 erfolgt und kaum eine Filtration im Nebenstrom über das untere Filterelement 14.

Das Filterelement 12 mit der gröberen Filterfeinheit ist mit einem Bypaßventil 76 an seinem oberen Ende versehen, um zu vermeiden, daß es zu Funktionsausfällen kommt, sobald der Hauptstromfilter mit dem oberen Filterelement 12 vollständig zugesetzt ist. In einem dahingehenden Fall öffnet dann das Bypaßventil 76 und erlaubt das Durchströmen des ungereinigten Fluids im Hauptstrom über die Innenräume 48 des oberen Filterelementes 12 und des unteren Elementes 14 zur Auslaßstelle 28 hin. Das Bypaßventil 76 ist vergleichbar dem Fluidventil 66 aufgebaut, so daß das hierfür Gesagte auch für das Bypaßventil 76 gilt. Um auch Wasser aus dem Fluid abscheiden zu können, weist das Filtermaterial 16 des unteren Filterelementes 14 wasserabsorbierende Schichten auf. Auch kann das Filtermaterial 16 des unteren Filterelementes 14 vollständig aus wasserabsorbierenden Materialien bestehen.

Die Filterelemente 12 und 14 sind bis auf ihre Länge und Filterfeinheiten geometrisch im wesentlichen miteinander identisch ausgebildet, d.h. Innenund Außendurchmesser entsprechen einander. Ferner bilden die Filterelemente 12,14 mit den zugeordneten Ventilen 66 und 76 sowie mit ihren Stützrohren 56 und der Trennplatte 38 eine Baueinheit, die sich als solche vollständig gegen eine neue austauschen läßt, wobei der Austausch über den oberen Abschlußdeckel 32 erfolgt. Die dahingehende Baueinheit läßt sich umweltfreundlich entsorgen, veraschen oder recyceln. Damit die genannte Baueinheit ferner sicher im Gehäuse 10 gehalten ist, ist nicht nur eine Abstützung über die Trennplatte 38 gehäuseseitig vorgesehen, sondern vielmehr ist im Bereich der unteren Auslaßstelle 28 eine ringförmige Filterelementaufnahme 78 vorgesehen, auf die sich die Baueinheit mit ihrem unteren Filterelement 14 aufschieben läßt. Dabei ist das Innere 48 des unteren Filterelementes 14 über eine O-Ring-Dichtung gegenüber dem unteren Filterraum 22 fluiddicht abgedichtet. Die Filterfeinheiten der Filtermaterialien 16 sind derart gewählt, daß sich für das obere Filterelement 12 eine grobe Filterfeinheit von z.B. 20µm ergibt, wohingegen das untere Filterelement eine relativ feine Filterfeinheit von beispielsweise 2µm aufweist.

Mit der erfindungsgemäßen Filtervorrichtung ist jedenfalls ein Hauptstromfilter 12 mit einem Nebenstromfilter 14 in einem Filtergehäuse 10 untergebracht mit nur einem Einlaß 26 und einem Auslaß 28. Das Filtergehäuse 10 kann auch, was nicht näher dargestellt ist, nur aus einer Kammer bestehen, beispielsweise, wenn es sich um den Einsatz in einem Tank handelt mit integriertem Filtertopf. Die Unterteilung in Haupt- und Nebenstromfilter läßt sich noch weiter abstufen, indem man mehr als zwei Filterelemente 12,14 (nicht dargestellt) in Parallelschaltung hintereinander anordnet. Demgemäß lassen sich feingestuftere Filterfeinheiten für mehrfach separierbare Volumenströme vorsehen. Ferner können die Filterelemente selbst wiederum mehrteilig aufgebaut sein, sofern dies aus Praktikabilitätsgründen notwendig sein sollte. Mit der gezeigten Filtervorrichtung ist es jedenfalls möglich, parallel einen großen hydraulischen Volumenstrom mit relativ grober Filterfeinheit, z.B. 20µm absolut, und einen kleinen Volumenstrom mit relativ feiner Filterfeinheit, beispielsweise 2µm absolut, durchströmen zu lassen. Die Abstimmung der Volumenströme wird durch die interne Stromregelung über die genannten Blenden oder Drosseln bezogen auf die Durchlaßstellen 24 und 50 erreicht. Hier wäre auch noch das Einbringen weiterer Drosseln oder Blenden möglich in Abhängigkeit von der gewünschten Stromregulierung.

Um die Wirksamkeit des Nebenstromfilters 14 unabhängig von der Verschmutzung des Hauptstromfilters 12 zu gewährleisten, wird in den Ausgang des Hauptstromfilters 12 und in dem Gehäuse 10 zwischen dem Filterelementober- und -unterteil die jeweils angesprochene Drosselvorrichtung integriert. Mit der Filtervorrichtung wird eine kompakte Funktions-, Installations- und Serviceeinheit ermöglicht, die sowohl für Anwendungen im Hochdruck- als auch im Niederdruckbereich (in Rücklauf- wie in Nebenstromleitungen) vorgesehen ist.

Bei der gezeigten Ausführungsform sind die Durchlaßstellen 24,50 jedenfalls derart ausgelegt, daß auf ein Volumenanteil, das im Nebenstrom über das Filterelement 14 mit der feineren Filterfeinheit strömt, acht bis zehn Volumenanteile im Hauptstrom über das Filterelement 12 mit der gröberen Filterfeinheit kommen. Für den dahingehenden Nebenstrombetrieb wird aus dem oberen Filterraum 20 jedenfalls eine verschmutzte Fluidmenge aus der Hauptstromrichtung über die Durchlaßstelle 24 in der Trennplatte 38 abgezweigt und derart in den unteren Filterraum 22 überführt für eine Feinstfilterung mit dem Nebenstromfilter 14. Alle über die Filtermaterialien 16 gefilterten Fluidbestandteile gelangen dann aber jedenfalls über die Innenräume 48 der Filterelemente 12,14 abgereinigt auf die Auslaßseite 28 der Vorrichtung.

## Patentansprüche

1. Filtervorrichtung mit einem Filtergehäuse (10), in dem mindestens zwei parallel geschaltete Filterelemente (12,14) mit voneinander verschiedenen Filterfeinheiten der Filtermaterialien (16) angeordnet sind, die mit ihren einander zugewandten Enden in stirnseitiger Anlage mit einer Trennplatte (38) sind und die über diese Trennplatte (38) voneinander getrennt sind, wobei die Trennplatte (38) eine erste Durchlaßstelle (24) aufweist für eine fluidführende Verbindung zwischen benachbarten Filterräumen (20,22), die in Fluidströmungsrichtung des abzureinigenden Fluids vor den Filtermaterialien (16) angeordnet sind sowie eine weitere Durchlaßstelle (50) für eine Verbindung der Innenräume (48) der Filterelemente (12, 14), die eine Drosselstelle ausbildet, **dadurch gekennzeichnet, daß** die Drosselstelle der weiteren Durchtaßstelle (50) aus einem Fluidventil (66) gebildet ist, welches mit einem vorgebbaren Schließdruck versehen wird, der zu einer Erhöhung des Vorspanndrukkes im Innenraum (48) des Filterelementes (12) mit der gröberen Filterfeinheit führt.

2. Filtervorrichtung nach Anspruch 1, **dadurch gekennzeichnet, daß** das Filtergehäuse (10) eine Einlaßstelle (26) für das abzureinigende Fluid und eine Auslaßstelle (28) für das abgereinigte Fluid aufweist und daß das Filterelement (12) mit der gröberen Filterfeinheit zu der Einlaßstelle (26) und das Filterelement (14) mit der feineren Fllterfeinheit zu der Auslaßstelle (28) benachbart gegenüberliegend angeordnet ist.

3. Filtervorrichtung nach Anspruch 1 oder 2, **dadurch gekennzeichnet, daß** die Trennplatte (38) mit dem Filtergehäuse (10) auf seiner innenseite dichtend verbunden ist und auf diese Weise das Filtergehäuse (10) in zwei benachbarte Gehäuseteilräume (44,46) untertellt.

4. Filtervorrichtung nach Anspruch 3, **dadurch gekennzeichnet, daß** der eine Gehäuseteilraum (44) mit dem Filterelement (12) mit der gröberen Filterfeinheit den Filterraum (20) aufweist, der mit der Einlaßstelle (26) fluidführend verbunden ist, und daß der andere Gehäuseteilraum (46) mit dem Filterelement (14) mit der feineren Füterfeinheit den anderen Fifterraum (22) aufweist, der über dieses Filterelement (14) fluidführend mit der Auslaßstelle (28) verbunden ist.

5. Filtervorrichtung nach einem der Ansprüche 1 bis 4, **dadurch gekennzeichnet, daß** die Filterelemente (12,14) koaxial zueinander innerhalb des Filtergehäuses (10) angeordnet sind und mit ihren freien einander abgewandten Enden in Elementaufnahmen (54) geführt sind.

6. Filtervorrichtung nach einem der Ansprüche 1 bis 5, **dadurch gekennzeichnet, daß** die Filtermaterialien (16) der Filterelemente (12, 14) durch Stützkörper (56,58,60) abgestützt sind, die modular aufgebaut an verschiedene Längenabmessungen der Filterelemente (12,14) anpaßbar sind.

7. Filtervorrichtung nach einem der Ansprüche 3 bis 6, **dadurch gekennzeichnet, daß** die erste Durchlaßstelle (24) aus einem bogenförmigen Durchlaßsegment gebildet ist.

8. Filtervorrichtung nach einem der Ansprüche 1 bis 7, **dadurch gekennzeichnet, daß** das Fluidventil (66) mit einem vorgebbaren Federschließdruck das Schließteil (68) in Richtung der weiteren Durchlaßstelle (50) drückt.

9. Filtervorrichtung nach einem der Ansprüche 1 bis 8, **dadurch gekennzeichnet, daß** zumindest das Filterelement (12) mit der gröberen Filterfeinheit mit einem Bypaßventil (76) versehen ist und daß mindestens eines der Filtermaterialien (16) wasserabsorbierende Eigenschaften aufweist.

10. Flltervorrichtung nach einem der Ansprüche 1 bis 9, **dadurch gekennzeichnet, daß** die Durchlaßstellen (24,50) derart ausgelegt sind, daß auf ein Volumenanteil, das im Nebenstrom über das Filterelement (14) mit der feineren Filterfeinheit strömt, acht bis zehn Volumenanteile im Hauptstrom über das Filterelement (12) mit der gröberen Filterfeinheit gelangen.

## Claims

1. A filter device with a filter housing (10) in which at least two filter elements (12, 14) with filter material (16) of different filtering grades are connected in parallel, with their ends facing each other being in contact with a separating plate (38) and separated from each other by this separating plate (38), whereby the separating plate (38) has one passage point (24) for a hydraulic connection between the adjacent filter chambers (20, 22) which are arranged in the direction of flow of the fluid which is to be filtered in front of the filter materials (16) and a further passage point (50) for connecting the inner chambers (48) of the filter elements (12, 14) which forms a throttling point, **characterised in that** the throttling point of the further passage point (50) is formed by a fluid valve (66) with a pre-settable closing pressure which causes an increase in the preload pressure within the inner chamber (48) of the filter element (12) with the coarser filtering grade.

2. A filter device according to Claim 1, **characterised in that** the filter housing (10) has an inlet (26) for the fluid which is to be filtered and an outlet (28) for the filtered fluid and that the filter element (12) with the coarser filter grade is arranged adjacent and opposite to the inlet (26) and the filter element (14) with the finer filtering grade is arranged adjacent and opposite to the outlet (28).

3. A filter device according to Claim 1 or 2, **characterised in that** the separating plate (38) is sealingly connected with the filter housing (10) on its inner side and that it separates the filter housing (10) into two adjoining partial housing chambers (44, 46).

4. A filter device according to Claim 3, **characterised in that** one partial housing chamber (44) with the filter element (12) with the coarser filter grade has the filter chamber (20) which is hydraulically connected with the inlet (26) and that the other partial housing chamber (46) with the filter element (14) with the finer filtering grade has the other filter chamber (22) which is hydraulically connected with the other filter chamber (22) which is connected with the outlet (28) via this filter element (14).

5. A filter device according to one of the Claims 1 to 4, **characterised in that** the filter elements (12, 14) are arranged coaxially to each other within the filter housing (10) and are held by their free ends facing each other in the element locations (54).

6. A filter device according to one of the Claims 1 to 5, **characterised in that** the filter materials (16) of the filter elements (12, 14) are supported by the supporting bodies (56, 58, 60) which are of modular design and adaptable to filter elements (12, 14) of various lengths.

7. A filter device according to one of the Claims 3 to 6, **characterised in that** the first passage (24) is formed by an arched passage segment.

8. A filter device according to one of the claims 1 to 7, **characterised in that** the fluid valve (66) exerts pressure on the closing part (68) in the direction of the further passage (50) at a presettable spring closing pressure.

9. A filter device according to one of the Claims 1 to 8, **characterised in that** at least the filter element (12) with the coarser filter grade is provided with a by-pass valve (76) and that at least one of the filter materials (16) has water-absorbing properties.

10. A filter device according to one of the Claims 1 to 9, **characterised in that** the passages (24,50) are designed to allow eight to ten volume units to pass in the main flow through the filter elements (12) with the coarser filtering grade to one volume unit which passes through the filter element (14) with the finer filtering grade.

## Revendications

1. Dispositif filtrant avec un boîtier filtrant (10), dans lequel sont disposés au moins deux éléments filtrants (12,14) montés en parallèle ayant des finesses de filtration des matières filtrantes (16) différentes les unes des autres, qui s'appuient sur une plaque de séparation (38) sur la face de devant par leurs extrémités dirigées les unes vers les autres et qui sont séparées l'une de l'autre par cette plaque de séparation (38), la plaque de séparation (38) comportant un premier point de passage (24) pour un raccordement de guidage de fluide entre des compartiments filtrants (20,22) adjacents qui sont disposés en amont des matières filtrantes (16) dans le sens d'écoulement du fluide à purifier ainsi qu'un autre point de passage (50) pour un raccordement des compartiments intérieurs (48) des éléments filtrants (12,14), qui forme un point d'étranglement, **caractérisé en ce que** le point d'étranglement de l'autre point de passage (50) est formé par un clapet hydraulique (66) qui est alimenté par une pression de fermeture prédéfinissable qui conduit à une élévation de la pression de précontrainte dans le compartiment intérieur (48) de l'élément filtrant (12) ayant la finesse de filtration la plus grossière.

2. Dispositif filtrant selon la revendication 1, **caractérisé en ce que** le boîtier filtrant (10) comporte un point d'admission (26) pour le fluide à purifier et un point d'évacuation (28) pour le fluide purifié et **en ce que** l'élément filtrant (12) ayant la finesse de filtration la plus grossière est disposé vers le point d'admission (26) et l'élément filtrant (14) ayant la finesse de filtration la plus fine est disposé vers le point d'évacuation (28), contigus et opposés.

3. Dispositif filtrant selon la revendication 1 ou 2, **caractérisé en ce que** la plaque de séparation (38) est raccordée de manière étanche au boîtier filtrant (10) sur son côté intérieur et divise ainsi le boîtier filtrant (10) en deux compartiments partiels de boîtier adjacents (44,46).

4. Dispositif filtrant selon la revendication 3, **caractérisé en ce qu'**un compartiment partiel de boîtier (44) avec l'élément filtrant (12) ayant la finesse de filtration la plus grossière comporte le compartiment filtrant (20) qui est raccordé avec le point d'admission (26) de manière à guider le fluide et **en ce que** l'autre compartiment partiel de boîtier (46) avec l'élément filtrant (14) ayant la finesse de filtration la plus fine comporte l'autre compartiment filtrant (22) qui est raccordé avec le point d'évacuation (28) de manière à guider le fluide par l'intermédiaire de cet élément filtrant (14).

5. Dispositif filtrant selon l'une quelconque des revendications 1 à 4, **caractérisé en ce que** les éléments filtrants (12,14) sont disposés dans le sens coaxial l'un par rapport à l'autre à l'intérieur du boîtier filtrant (10) et sont guidés dans des logements d'éléments (54) par leurs extrémités libres opposées l'une à l'autre.

6. Dispositif filtrant selon l'une quelconque des revendications 1 à 5, **caractérisé en ce que** les matières filtrantes (16) des éléments filtrants (12,14) sont soutenues par des corps d'appui (56,58,60) qui peuvent être adaptés selon le principe modulaire à diverses mesures de longueur des éléments filtrants (12,14).

7. Dispositif filtrant selon l'une quelconque des revendications 3 à 6, **caractérisé en ce que** le premier point de passage (24) est formé par un segment de passage recourbé.

8. Dispositif filtrant selon l'une quelconque des revendications 1 à 7, **caractérisé en ce que** le clapet hydraulique (66) presse l'élément de fermeture (68) dans la direction de l'autre point de passage (50) avec une pression de ressort de fermeture.

9. Dispositif filtrant selon l'une quelconque des revendications 1 à 8, **caractérisé en ce qu'**au moins l'élément filtrant (12) ayant la finesse de filtration la plus grossière est muni d'une soupape de dérivation (76) et **en ce qu'**au moins l'une des matières filtrantes (16) présente des propriétés d'absorption d'eau.

10. Dispositif filtrant selon l'une quelconque des revendications 1 à 9, **caractérisé en ce que** les points de passage (24,50) sont conçus de telle manière que, pour une part de volume qui s'écoule dans le courant secondaire par l'élément filtrant (14) ayant la finesse de filtration la plus fine, huit à dix parts de volume parviennent dans le courant principal par l'élément filtrant (12) ayant la finesse de filtration la plus grossière.
